# FASCICULE DE BREVET EUROPEEN

(11) **EP 1 142 269 B1**
(45) Date de publication et mention de la délivrance du brevet: **26.07.2006**
(21) Numéro de dépôt: 99962284.8
(22) Date de dépôt: 24.12.1999
(51) Int. Cl.: H04L 29/12, H04L 29/06

(54) **PROCEDE D'ADRESSAGE ET SERVEUR DE NOMS ET D'ADRESSES DANS UN RESEAU NUMERIQUE**
ADRESSIERUNGSVERFAHREN UND NAMEN- UND ADRESSEN- SERVER IN EINEM DIGITALEN NETZ
ADDRESSING METHOD AND NAME AND ADDRESS SERVER IN A DIGITAL NETWORK

(30) Priorité: 24.12.1998 FR 9816449
(43) Date de publication de la demande: 10.10.2001
(73) Titulaire: FRANCE TELECOM, 75015 Paris (FR)
(72) Inventeur: REMAEL, François-Arnaud, F-22560 Pleumeur Bodou (FR)
(74) Mandataire: Loisel, Bertrand
(86) Numéro de dépôt international: PCT/FR1999/003288
(87) Numéro de publication internationale: WO 2000/039980

(56) Documents cités:
- WO-A-99/38303
- US-A- 5 828 893
- DAMANI O P ET AL: "ONE-IP: techniques for hosting a service on a cluster of machines" COMPUTER NETWORKS AND ISDN SYSTEMS, vol. 29, no. 8-13, 1 septembre 1997 (1997-09-01), page 1019-1027 XP004095300 ISSN: 0169-7552
- TSUCHIYA P F ET AL: "Extending the IP Internet through address reuse" COMPUTER COMMUNICATIONS REVIEW, vol. 1, no. 23, 1 janvier 1993 (1993-01-01), page 16-33 XP002075152 ISSN: 0146-4833

## Description

La présente invention se rapporte à un procédé d'adressage dans un réseau numérique de télécommunications, ainsi qu'à un serveur de noms et d'adresses mettant en oeuvre un tel procédé.

L'invention appartient au domaine de l'adressage des machines en réseau. Elle s'applique plus particulièrement à un réseau numérique de télécommunications ayant des première et seconde zones d'adressage, entre lesquelles une unité d'interface assure des traductions d'adresse.

En effet, si l'adressage utilisé dans la première zone est différent de celui utilisé dans la seconde zone, la communication entre une machine source située dans une zone et une machine destinataire située dans l'autre zone nécessite notamment la traduction des adresses affectées à ces machines, au niveau de l'interface entre les deux zones d'adressage.

L'adressage IP (en anglais "Internet Protocol"), c'est-à-dire le mode d'attribution d'adresses utilisé par Internet, est généralement un adressage de type dynamique dans les réseaux en ligne à bas débit.

Lorsqu'un client se connecte à un fournisseur de services Internet, ou ISP (en anglais "Internet Service Provider") qui communique avec ce client au moyen d'une adresse privée, l'ISP alloue une adresse issue d'une liste d'adresses publiques IP qu'il détient. Le client peut alors communiquer avec le domaine public au moyen de l'adresse publique qui lui a été allouée. Dès que le client se déconnecte, l'adresse qui lui avait été allouée redevient disponible pour un autre utilisateur.

Cette organisation a jusqu'à présent été rendue possible par le fait que les clients des ISP sont souvent amenés à se déconnecter, d'une part parce que la tarification est souvent fonction de la durée des connexions, et d'autre part parce que ces clients souhaitent libérer leur ligne téléphonique pour pouvoir être contactés.

Toutefois, on observe actuellement une tendance à facturer, non plus en fonction de la durée des connexions, mais au forfait, de sorte que le nombre de déconnexions tendrait vraisemblablement à diminuer.

En outre, les clients ne sont plus nécessairement contraints de se déconnecter pour libérer leur ligne téléphonique, étant donné qu'il existe des techniques de télécommunications relativement récentes permettant d'utiliser simultanément le service téléphonique et des services de consultation. Parmi ces techniques, on peut par exemple citer l'utilisation d'un support distinct tel que le câble, ou encore la mise en oeuvre de liaisons ADSL (en anglais "Asymmetric Digital Subscriber Line").

Dans un tel contexte d'évolution économique et technique, les clients n'auront vraisemblablement plus la contrainte de devoir se déconnecter aussi souvent que jusqu'ici. Dans ce cas, l'utilisation de la technique précitée ne conviendra plus pour récupérer en vue de la réattribuer l'adresse IP d'un client.

Comme solution pour remédier au manque d'adresses publiques, on peut dans certaines conditions utiliser un adressage privé, c'est-à-dire attribuer au client une adresse privée puis à la sortie de la zone privée contrôlée par l'ISP procéder à une traduction d'adresse à l'aide de la fonction NAT.

La fonction de traduction d'adresse de réseau, ou NAT (en anglais "Network Address Translation"), généralement mise en place en un point de sortie du domaine privé qui utilise un adressage local spécifique, met en oeuvre l'adressage dynamique précité : elle gère une liste d'adresses IP publiques et met en correspondance une adresse privée d'une machine appelante avec une adresse IP prise dans la liste, et effectue une traduction d'adresse pour chaque paquet arrivant au point de NAT et qui transite de la machine appelante du domaine privé vers une machine contactée du domaine public.

Ainsi, pour la machine contactée, tout se passe comme si l'adresse de la machine appelante du domaine privé était l'adresse publique contenue dans la liste d'adresses IP.

La machine contactée répond donc à la machine appelante vers cette adresse, et lorsqu'un paquet de réponse arrive au point de NAT, le routeur assure la traduction de l'adresse contenue dans la liste d'adresses IP vers l'adresse privée de destination et fait suivre le paquet dans le domaine privé vers la machine appelante. Des exemples de tels mécanismes d'adressage sont décrits dans les documents "ONE-IP: techniques for hosting a service on a cluster of machines" et "Extending the IP Internet through address reuse.

Un inconvénient de ce mécanisme d'adressage est qu'il ne permet pas à une machine du domaine d'adressage public d'envoyer un paquet vers une machine du domaine d'adressage privé sans action de celle-ci, puisque la mise en correspondance des adresses est dynamique, donc temporaire, et que l'adresse privée est inconnue des tables de routage.

Par ailleurs, dans le cadre de nouvelles applications telles que la téléphonie par Internet, il est actuellement nécessaire de posséder une adresse IP pour pouvoir être contacté, afin que les paquets de données puissent être routés vers la machine correspondante.

La présente invention a pour but de pallier les inconvénients précités en facilitant l'établissement de communications du domaine public vers le domaine privé.

Pour cela, la présente invention propose un procédé d'adressage dans un réseau numérique de télécommunications ayant des première et seconde zones d'adressage entre lesquelles une interface assure des traductions d'adresse, comprenant les étapes suivantes :
- un serveur de noms et d'adresses situé dans la première zone d'adressage reçoit, en provenance d'une première adresse de la première zone, affectée à une machine source, une requête de fourniture d'adresse relativement au nom d'une machine destinataire ;
- si la machine destinataire est située dans la seconde zone d'adressage, le serveur de noms et d'adresses envoie vers une seconde adresse de la première zone un premier paquet contenant au moins le nom de la machine destinataire ;
- l'interface retransmet le premier paquet vers une première adresse de la seconde zone, affectée à une unité de gestion et associée de façon statique à la seconde adresse de la première zone ;
- l'unité de gestion obtient une seconde adresse de la seconde zone affectée à la machine destinataire dont le nom figure dans le premier paquet ;
- l'unité de gestion envoie à l'interface un second paquet destiné au serveur de noms et d'adresses comportant la seconde adresse de la seconde zone en tant qu'adresse d'origine ;
- l'interface transmet le second paquet au serveur de noms et d'adresses en remplaçant l'adresse d'origine par une troisième adresse de la première zone, faisant partie d'une liste d'adresses de la première zone allouée à la seconde zone d'adressage et associée de façon dynamique à la seconde adresse de la seconde zone ;
- le serveur de noms et d'adresses reçoit le second paquet, en extrait la troisième adresse formant l'adresse d'origine, et inclut cette troisième adresse dans une réponse à la requête de fourniture d'adresse retournée vers la première adresse de la première zone.

Le procédé comporte ainsi l'association de la fonction NAT aux fonctions classiques d'un serveur de noms et d'adresses ou DNS (en anglais "Domain Name Server"), lesquelles consistent entre autres à obtenir l'adresse IP qui correspond à un nom de machine.

Ainsi, la présente invention permet à une machine source de la zone d'adressage public d'établir une connexion en vue de communiquer avec une machine destinataire de la zone d'adressage privé, en réalisant l'acheminement des noms et adresses appropriés entre les deux zones d'adressage.

La solution proposée consiste à maintenir, au niveau de l'interface domaine public/domaine privé, une association statique entre la seconde adresse de la première zone, c'est-à-dire l'adresse publique connue du serveur de noms et d'adresses, et une adresse de la seconde zone correspondant à l'adresse privée affectée à l'unité de gestion.

Dans un mode particulier de réalisation du procédé permettant une meilleure synchronisation, le premier paquet envoyé par le serveur de noms et d'adresses vers la seconde adresse de la première zone contient, en plus du nom de la machine destinataire, un numéro de séquence.

Dans un mode particulier de réalisation du procédé procurant une plus grande sécurité de transmission, le premier paquet envoyé par le serveur de noms et d'adresses vers la seconde adresse de la première zone contient, en plus du nom de la machine destinataire, une clé d'authentification.

Selon un autre aspect, afin d'atteindre le but précité, la présente invention propose également un serveur de noms et d'adresses dans un réseau numérique de télécommunications ayant des première et seconde zones d'adressage entre lesquelles une interface assure des traductions d'adresse, ce serveur étant situé dans la première zone d'adressage et comprenant :
- un module de stockage de données pour mémoriser des associations entre des noms de machine et des adresses de la première zone ; et
- un module de traitement de données agencé pour répondre à la réception, en provenance d'une première adresse de la première zone, d'une requête de fourniture d'adresse relativement au nom d'une machine destinataire appartenant à la seconde zone d'adressage par l'émission vers une seconde adresse de la première zone d'un premier paquet contenant au moins ledit nom de machine destinataire, et pour renvoyer à ladite première adresse, après réception depuis la seconde zone d'un second paquet contenant une adresse de la seconde zone, une réponse fournissant ladite adresse de la seconde zone.

Le serveur de noms et d'adresses présente notamment la particularité de s'adresser systématiquement à l'unité de gestion lorsqu'il reçoit une requête d'adressage vers la zone d'adressage privé.

Couplé à la fonction NAT, le serveur de noms et d'adresses établit une correspondance entre l'adresse privée de la machine destinataire et une adresse dynamique issue de la liste d'adresses IP et renvoie cette adresse IP en guise de réponse à la machine source. La machine source peut alors contacter la machine destinataire.

Ni le serveur de noms et d'adresses, ni l'unité de gestion ne constituent des points de passage du trafic dans le réseau. Par conséquent, la structure et le fonctionnement de ces deux entités ne sont pas susceptibles de créer un goulot d'étranglement pour le trafic.

Par ailleurs, l'invention permet de manipuler un nombre d'adresses IP en rapport, non pas avec le nombre de clients, mais avec le nombre de connexions établies à partir de la zone d'adressage privé vers la zone d'adressage public.

D'autres aspects et avantages de la présente invention apparaîtront à la lecture de la description qui suit d'un mode particulier de réalisation, donné à titre d'exemple non limitatif. La description se réfère aux dessins qui l'accompagnent, dans lesquels :
- la figure 1 illustre de façon schématique différentes entités qui coopèrent pour mettre en oeuvre le procédé d'adressage de l'invention, ainsi que des messages échangés par ces entités au cours des étapes successives du procédé d'adressage de l'invention, dans un mode particulier de réalisation ; et
- la figure 2 représente de façon schématique un serveur de noms et d'adresses selon l'invention, dans un mode particulier de réalisation.

A titre d'exemple non limitatif, la présente invention sera décrite ici dans son application à un réseau dans lequel la première zone d'adressage utilise des adresses IP dites "publiques", conformes au mode d'attribution d'adresses utilisé par le réseau Internet, et la seconde zone d'adressage utilise des adresses locales spécifiques dites "privées", attribuées indépendamment des adresses publiques.

La solution décrire repose sur l'hypothèse selon laquelle le réseau Internet met en oeuvre des adresses au format du protocole IP V4.

Lorsqu'une machine de la seconde zone d'adressage (privé) souhaite établir une connexion vers une machine de la première zone d'adressage (Internet), on met simplement en oeuvre la fonction NAT classique. La succession des étapes classiques correspondantes ne sera donc pas décrite ici.

Le domaine public, ou première zone d'adressage, s'entend ici comme incluant des machines qui seraient comprises dans des domaines privés reliés à l'Internet autres que le domaine privé pour lequel l'invention est mise en oeuvre. Ce qui importe est qu'une adresse publique (temporaire ou permanente) soit attribuée à ces machines.

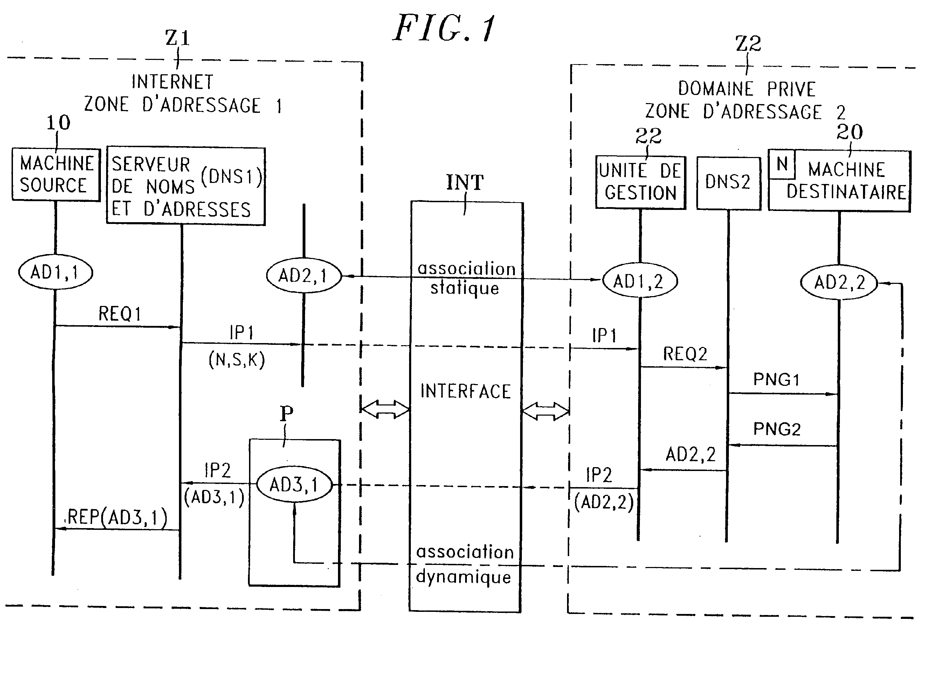

Comme le montre la figure 1, l'invention vise à permettre la communication à partir d'une machine "source" 10, située dans le domaine public Z1, vers une machine "destinataire" 20, située dans le domaine privé Z2.

De façon classique, la machine source 10 recherche d'abord une correspondance entre le nom N de la machine destinataire 20, qu'elle connaît, et l'adresse de cette machine 20.

Pour cela, de façon connue en soi, la machine source 10, dont l'adresse publique est AD1,1, émet une requête REQ1 de fourniture d'adresse vers un serveur de noms et d'adresses DNS1 situé dans la zone Z1.

La requête REQ1 présente une forme habituelle, avec notamment l'adresse source AD1,1 et le nom N de la machine destinataire, lequel est par exemple du type 'toto.ft.fr'.

Comme le montre la figure 1, le serveur de noms et d'adresses DNS1 émet alors un premier paquet de données IP1 vers une seconde adresse AD2,1 de la zone Z1, adresse publique connue du serveur DNS1.

Le serveur DNS1 identifie, sur la base de tout ou partie du nom N que la requête concerne le domaine privé considéré. Il peut par exemple contenir une table indiquant que les noms se terminant par le suffixe : ft.fr' concernent le domaine privé considéré, de sorte que les requêtes REQ1 comportant de tels noms doivent faire l'objet de l'émission d'un paquet IP1 à l'adresse AD2,1.

Le paquet IP1 est destiné à une unité de gestion 22 située dans la seconde zone d'adressage Z2 du réseau privé. Une adresse privée AD1,2 est affectée dans la zone Z2 à l'unité de gestion 22.

Le paquet IP1 présente une structure IP classique et contient notamment l'adresse publique du serveur de noms et d'adresses DNS1 comme adresse source, l'adresse publique AD2, 1 comme adresse destinataire, et dans sa partie données ("payload"), le nom N de la machine destinataire, par exemple 'toto.ft.fr'.

En option, le paquet IP1 peut également contenir, à des fins de synchronisation, un numéro de séquence S sous forme d'un nombre prédéterminé de bits et/ou, à des fins de sécurisation, une clé d'authentification K publique ou privée, associée à un algorithme de chiffrement et/ou de signature électronique de données.

La seconde adresse AD2,1 de la zone Z1 est connue à la fois du serveur de noms et d'adresses DNS1 et d'une interface INT, dont une fonction de base consiste à assurer la traduction d'adresses entre les zones Z1 et Z2.

De façon avantageuse, la fonction de traduction d'adresses assurée par l'interface INT est réalisée par un routeur de type classique, ceci ne requérant aucune modification du routeur. Néanmoins, en variante, l'interface INT peut former une entité propre, indépendante du routeur.

Lorsque l'interface INT reçoit le paquet IP1 envoyé à l'adresse publique AD2,1, elle le retransmet à l'unité de gestion 22, à son adresse privée AD1,2.

Ensuite, l'unité de gestion 22 émet une requête REQ2 vers un serveur de noms et d'adresses de type classique DNS2 de la zone Z2, pour connaître la correspondance entre le nom 'toto.ft.fr' de la machine destinataire 20 et son adresse privée AD2,2. La réponse à la requête REQ2 contient donc une adresse privée, par exemple du type 'a.b.c.d', a, b, c et d désignant des nombres décimaux, selon le format habituel des adresses IP. Soit arbitrairement '10.10.10.4' l'adresse privée correspondant à la machine 'toto.ft.fr'.

En variante, les fonctions assurées par le serveur de noms et d'adresses DNS2 et par l'unité de gestion 22 peuvent être réunies dans un module unique. Dans ce cas, l'étape de requête REQ2 peut être supprimée et le module unique obtient directement l'adresse privée '10.10.10.4'.

En option, l'unité de gestion 22 et/ou le serveur DNS2 peut interroger la machine destinataire 20 à l'adresse AD2,2 afin de savoir si elle est présente sur le réseau privé, c'est-à-dire active et connectée (message PNG1 de la figure 1). Si la machine 20 est présente, elle répond par un message d'accusé PNG2.

Ensuite, l'unité de gestion 22 envoie à l'interface INT un second paquet IP, noté IP2, contenant comme adresse source l'adresse privée AD2,2, ici '10.10.10.4', de la machine destinataire 'toto.ft.fr', et comme adresse destinataire l'adresse publique du serveur de noms et d'adresses DNS1 de la zone Z1.

La partie données du second paquet IP2 reprend des éléments du premier paquet IP1, tels que le nom de la machine source 10 et le numéro de séquence S pour synchronisation.

Lorsqu'elle reçoit le second paquet IP2, l'interface INT remplace l'adresse source AD2,2 par une troisième adresse AD3,1 de la zone Z1.

La troisième adresse AD3,1 fait partie d'une liste P d'adresses IP de la zone Z1, allouée à la zone Z2. Soit arbitrairement AD3,1 = '192.4.147.2'. L'interface INT crée une association dynamique, par exemple à l'aide d'une fonction NAT classique, entre l'adresse AD3,1 et l'adresse source AD2,2 qu'elle a reçue, et retransmet le paquet IP2 avec l'adresse AD3,1 en lieu et place de l'adresse AD2,2 au serveur de noms et d'adresses DNS1.

Ensuite, le serveur de noms et d'adresses DNS1, à réception du paquet IP2, en extrait la troisième adresse AD3,1 et l'inclut dans une réponse REP à la requête REQ1 de fourniture d'adresses provenant initialement de la machine source 10 de la zone Z1, par l'intermédiaire de l'adresse AD1, 1.

La réponse REP contient, de façon connue en soi, une donnée indicative de la durée minimale de validité de l'association dynamique entre les adresses AD3,1 et AD2,2. Cette donnée est fonction des paramètres de configuration de l'interface INT, c'est-à-dire du routeur au cas où les fonctions de l'interface sont réalisées par un routeur.

L'information de temps dévie (champ TTL selon le protocole IP) incluse par le serveur DMS1 dans la réponse REP peut ainsi représenter la durée minimale de la correspondance dynamique entre l'adresse privée AD2,2 de la machine destinataire et son adresse publique temporaire AD3,1. Cette information est fournie par la fonction NAT de l'interface INT.

La machine source 10 de la zone Z1 est alors en mesure d'établir une connexion avec la machine destinataire 20 de la zone Z2, en émettant vers l'adresse AD3, 1. La fonction NAT de l'interface INT assurera les traductions d'adresse requises.

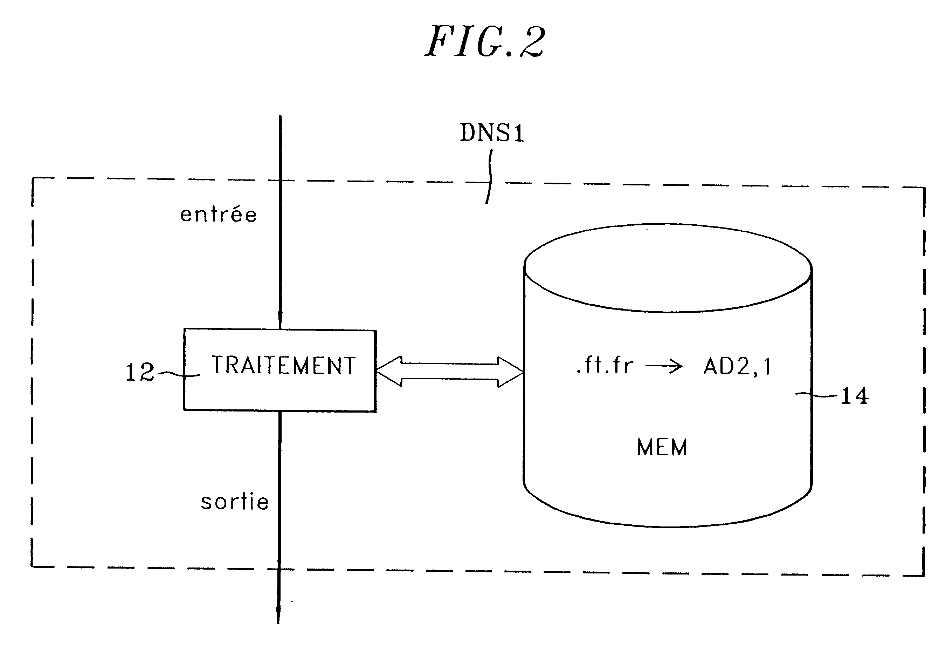

La figure 2 représente de façon schématique la structure globale d'un serveur de noms et d'adresses tel que le serveur DNS1, susceptible de coopérer avec une unité de gestion en vue de mettre en oeuvre un procédé d'adressage du type décrit ci-dessus.

Dans le mode particulier de réalisation représenté sur la figure 2, le serveur DNS1 comprend un module 12 de traitement de données, qui réalise de façon classique l'association entre des noms de machines contenus dans des paquets entrants et des adresses IP issues de tables de correspondance stockées dans une mémoire 14, qui sont renvoyées dans des messages de réponse. Lorsque le nom relève du domaine privé Z1 auquel l'invention est appliquée, le module 12 envoie le paquet IP1 vers l'adresse publique AD2,1 de la zone Z1, obtenue dans la mémoire 14. Ensuite, lorsque le module 12 reçoit le paquet IP2, qui comporte l'adresse AD3,1 associée de façon dynamique à l'adresse AD2,2 de la machine destinataire 20, il inclut cette adresse AD3,1 dans la réponse REP à la requête REQ1 de fourniture d'adresse provenant de l'adresse AD1,1 de la machine source 10.

## Revendications

1. Procédé d'adressage dans un réseau numérique de télécommunications ayant des première et seconde zones d'adressage (Z1,Z2) entre lesquelles une interface (INT) assure des traductions d'adresse, comprenant les étapes suivantes :
- un serveur de noms et d'adresses (DNS1) situé dans la première zone d'adressage (Z1) reçoit, en provenance d'une première adresse (AD1,1) de la première zone, affectée à une machine source (10), une requête (REQ1) de fourniture d'adresse relativement au nom (N) d'une machine destinataire (20) ;
- si la machine destinataire (20) est située dans la seconde zone d'adressage (Z2), le serveur de noms et d'adresses (DNS1) envoie vers une seconde adresse (AD2,1) de la première zone un premier paquet (IP1) contenant au moins ledit nom (N) de machine destinataire (20) ;
- l'interface (INT) retransmet le premier paquet (IP1) vers une première adresse (AD1,2) de la seconde zone, affectée à une unité de gestion (22) et associée de façon statique à la seconde adresse (AD2,1) de la première zone ;
- l'unité de gestion (22) obtient une seconde adresse (AD2,2) de la seconde zone affectée à la machine destinataire (20) dont le nom (N) figure dans le premier paquet (IP1) ;
- l'unité de gestion (22) envoie à l'interface (INT) un second paquet (IP2) destiné au serveur de noms et d'adresses (DNS1) comportant la seconde adresse (AD2,2) de la seconde zone en tant qu'adresse d'origine ;
- l'interface (INT) transmet le second paquet (IP2) au serveur de noms et d'adresses (DNS1) en remplaçant l'adresse d'origine par une troisième adresse (AD3, 1) de la première zone, faisant partie d'une liste (P) d'adresses de la première zone (Z1) allouée à la seconde zone d'adressage (Z2) et associée de façon dynamique à la seconde adresse (AD2,2) de la seconde zone ;
- le serveur de noms et d'adresses (DNS1) reçoit le second paquet (IP2), en extrait la troisième adresse (AD3,1) formant l'adresse d'origine, et inclut cette troisième adresse (AD3,1) dans une réponse (REP) à la requête (REQ1) de fourniture d'adresse retournée vers la première adresse (AD1,1) de la première zone.

2. Procédé selon la revendication 1, dans lequel ledit premier paquet (IP1) envoyé par le serveur de noms et d'adresses (DNS1) vers ladite seconde adresse (AD2,1) de la première zone contient, en plus dudit nom (N) de machine destinataire (20), un numéro de séquence (S) et/ou une clef d'authentification (K).

3. Procédé selon la revendication 1 ou 2, dans lequel le serveur de noms et d'adresses (DNS1) inclut dans la réponse (REP) une information de temps de vie représentant une durée minimale de correspondance dynamique entre ladite seconde adresse de la seconde zone (AD2,2) et ladite troisième adresse de la première zone (AD3,1).

4. Procédé selon l'une quelconque des revendications 1 à 3 dans lequel l'unité de gestion (22) ou un second serveur de noms et d'adresses (DNS2) associé à cette unité interroge la machine destinataire (20) après avoir obtenu la seconde adresse de la seconde zone (AD2,2) afin de confirmer la présence de cette machine destinataire avant d'envoyer le second paquet (IP2) à l'interface (INT).

5. Serveur de noms et d'adresses (DNS1) dans un réseau numérique de télécommunications ayant des première et seconde zones d'adressage (21,22) entre lesquelles une interface (INT) assure des traductions d'adresse, ledit serveur (DNS1) étant situé dans la première zone d'adressage (Z1) et comprenant :
- un module (14) de stockage de données pour mémoriser des associations entre des noms de machine et des adresses de la première zone ; et
- un module (12) de traitement de données agencé pour répondre à la réception, en provenance d'une première adresse (AD1,1) de la première zone, d'une requête (REQ1) de fourniture d'adresse relativement au nom (N) d'une machine destinataire (20) appartenant à la seconde zone d'adressage par l'émission vers une seconde adresse (AD2,1) de la première zone d'un premier paquet (IP1) contenant au moins ledit nom (N) de machine destinataire (20), et pour renvoyer à ladite première adresse (AD1,1), après réception depuis la seconde zone d'un second paquet contenant une troisième adresse (AD3,1) de la première zone, associée de façon dynamique à une seconde adresse (AD2,2) de la machine destinataire de la seconde zone, une réponse fournissant ladite troisième adresse (AD3, 1) de la première zone.

## Claims

1. Method of addressing in a digital telecommunications network having first and second addressing zones (Z1,Z2) between which an interface (INT) caters for address translations, comprising the following steps:
- a name and address server (DNS1) situated in the first addressing zone (Z1) receives, originating from a first address (AD1,1) of the first zone, assigned to a source machine (10), a request (REQ1) to provide an address in relation to the name (N) of a destination machine (20);
- if the destination machine (20) is situated in the second addressing zone (Z2), the name and address server (DNS1) sends to a second address (AD2,1) of the first zone a first packet (IP1) containing at least the said name (N) of destination machine (20);
- the interface (INT) retransmits the first packet (IP1) to a first address (AD1,2) of the second zone, assigned to a management unit (22) and associated in a static manner with the second address (AD2,1) of the first zone;
- the management unit (22) obtains a second address (AD2,2) of the second zone assigned to the destination machine (20) whose name (N) appears in the first packet (IP1);
- the management unit (22) sends the interface (INT) a second packet (IP2) destined for the name and address server (DNS1) comprising the second address (AD2,2) of the second zone as origin address;
- the interface (INT) transmits the second packet (IP2) to the name and address server (DNS1) while replacing the origin address by a third address (AD3,1) of the first zone, forming part of a list (P) of addresses of the first zone (Z1) allotted to the second addressing zone (Z2) and associated in a dynamic manner with the second address (AD2,2) of the second zone;
- the name and address server (DNS1) receives the second packet (IP2), extracts therefrom the third address (AD3,1) forming the origin address, and includes this third address (AD3,1) in a response (REP) to the request (REQ1) to provide an address returned to the first address (AD1,1) of the first zone.

2. Method according to Claim 1, in which the said first packet (IP1) sent by the name and address server (DNS1) to the said second address (AD2,1) of the first zone contains, in addition to the said name (N) of destination machine (20), a sequence number (S) and/or an authentication key (K).

3. Method according to Claim 1 or 2, in which the name and address server (DNS1) includes in the response (REP) a lifetime cue representing a minimum duration of dynamic match between the said second address of the second zone (AD2,2) and the said third address of the first zone (AD3,1) .

4. Method according to any one of Claims 1 to 3, in which the management unit (22) or a second name and address server (DNS2) associated with this unit interrogates the destination machine (20) after having obtained the second address of the second zone (AD2,2) so as to confirm the presence of this destination machine before sending the second packet (IP2) to the interface (INT).

5. Name and address server (DNS1) in a digital telecommunications network having first and second addressing zones (Z1,Z2) between which an interface (INT) caters for address translations, the said server (DNS1) being situated in the first addressing zone (Z1) and comprising:
- a data storage module (14) for storing associations between machine names and addresses of the first zone; and
- a data processing module (12) designed to respond to the receipt, originating from a first address (AD1, 1) of the first zone, of a request (REQ1) to provide an address in relation to the name (N) of a destination machine (20) belonging to the second addressing zone through the transmission to a second address (AD2,1) of the first zone of a first packet (IP1) containing at least the said name (N) of destination machine (20), and to send back to the said first address (AD1,1), after receipt from the second zone of a second packet containing a third address (AD3,1) of the first zone, associated in a dynamic manner with a second address (AD2,2) of the destination machine of the second zone, a response providing the said third address (AD3,1) of the first zone.

## Patentansprüche

1. Adressierverfahren in einem digitalen Telekommunikationsnetzwerk mit ersten und zweiten Adressierzonen (Z1, Z2), zwischen denen eine Schnittstelle (INT) Adressenumsetzungen gewährleistet, das die folgenden Schritte aufweist:
- ein Namen- und Adressenserver (DNS1), der sich in der ersten Adressierzone (Z1) befindet, empfängt von einer ersten Adresse (AD1,1) der ersten Zone, die einer Ausgangsmaschine (10) zugeteilt ist, eine Anforderung (REQ1) zur Lieferung einer Adresse bezüglich des Namens (N) einer Zielmaschine (20);
- wenn die Zielmaschine (20) sich in der zweiten Adressierzone (Z2) befindet, sendet der Namen- und Adressenserver (DNS1) an eine zweite Adresse (AD2,1) der ersten Zone ein erstes Paket (IP1), das mindestens den Namen (N) der Zielmaschine (20) enthält;
- die Schnittstelle (INT) überträgt das erste Paket (IP1) weiter zu einer ersten Adresse (AD1,2) der zweiten Zone, die einer Verwaltungseinheit (22) zugeteilt und statisch der zweiten Adresse (AD2,1) der ersten Zone zugeordnet ist;
- die Verwaltungseinheit (22) empfängt eine zweite Adresse (AD2,2) von der zweiten, der Zielmaschine (20) zugeteilten Zone, deren Namen (N) im ersten Paket (IP1) enthalten ist;
- die Verwaltungseinheit (22) sendet an die Schnittstelle (INT) ein zweites Paket (IP2), das für den Namen- und Adressenserver (DNS1) bestimmt ist und die zweite Adresse (AD2,2) der zweiten Zone als Ursprungsadresse enthält;
- die Schnittstelle (INT) überträgt das zweite Paket (IP2) an den Namen- und Adressenserver (DNS1), indem sie die Ursprungsadresse durch eine dritte Adresse (AD3,1) der ersten Zone ersetzt, die Teil einer Liste (P) von Adressen der ersten Zone (Z1) ist, die der zweiten Adressierzone (Z2) zugewiesen und der zweiten Adresse (AD2,2) der zweiten Zone dynamisch zugeordnet ist;
- der Namen- und Adressenserver (DNS1) empfängt das zweite Paket (IP2), entnimmt daraus die die Ursprungsadresse bildende dritte Adresse (AD3,1) und schließt diese dritte Adresse (AD3,1) in eine Antwort (REP) auf die Anforderung (REQ1) zur Lieferung einer Adress ein, die zur ersten Adresse (AD1,1) der ersten Zone zurückgeschickt wird.

2. Verfahren nach Anspruch 1, bei dem das erste Paket (IP1), das vom Namen- und Adressenserver (DNS1) an die zweite Adresse (AD2,1) der ersten Zone geschickt wird, zusätzlich zum Namen (N) der Zielmaschine (20) eine Sequenznummer (S) und/oder einen Authentifizierungsschlüssel (K) enthält.

3. Verfahren nach Anspruch 1 oder 2, bei dem der Namen- und Adressenserver (DNS1) in die Antwort (REP) eine Lebensdauerinformation einschließt, die eine minimale Dauer einer dynamischen Korrespondenz zwischen der zweiten Adresse der zweiten Zone (AD2,2) und der dritten Adresse der ersten Zone (AD3,1) darstellt.

4. Verfahren nach einem der Ansprüche 1 bis 3, bei dem die Verarbeitungseinheit (22) oder ein dieser Einheit zugeordneter, zweiter Namen- und Adressenserver (DNS2) die Zielmaschine (20) abfragt, nachdem er die zweite Adresse der zweiten Zone (AD2,2) empfangen hat, um das Vorhandensein dieser Zielmaschine zu bestätigen, ehe das zweite Paket (IP2) an die Schnittstelle (INT) geschickt wird.

5. Namen- und Adressenserver (DNS1) in einem digitalen Telekommunikationsnetzwerk mit ersten und zweiten Adressierzonen (Z1, Z2), zwischen denen eine Schnittstelle (INT) Adressenumsetzungen gewährleistet, wobei der Server (DNS1) sich in der ersten Adressierzone (Z1) befindet und aufweist:
- einen Datenspeicherungsmodul (14), um Zuordnungen zwischen Maschinennamen und Adressen der ersten Zone zu speichern; und
- einen Datenverarbeitungsmodul (12), der ausgelegt ist, um auf den Empfang einer von einer ersten Adresse (AD1,1) der ersten Zone stammenden Anforderung (REQ1) zur Lieferung einer Adresse bezüglich des Namens (N) einer zur zweiten Adressierzone gehörenden Zielmaschine (20) durch das Senden eines ersten Pakets (IP1) an eine zweite Adresse (AD2,1) der ersten Zone zu antworten, das mindestens den Namen (N) der Zielmaschine (20) aufweist, und um an die erste Adresse (AD1,1) nach dem Empfang eines zweiten Pakets von der zweiten Zone, das eine dritte Adresse (AD3,1) der ersten Zone enthält, die dynamisch einer zweiten Adresse (AD2,2) der Zielmaschine der zweiten Zone zugeordnet ist, eine Antwort zurückzusenden, die die dritte Adresse (AD3,1) der ersten Zone liefert.
